# EUROPEAN PATENT APPLICATION

(11) **EP 2 060 623 A1**
(43) Date of publication of application: **20.05.2009**
(21) Application number: 07425718.9
(22) Date of filing: 13.11.2007
(51) Int. Cl.: C12G 1/02

(54) **Apparatus and method for a fermenting processing of a pressed vegetal product**

(71) Applicant: L.A.S.I. s.r.l., 30020 Meolo (Venezia) (IT)
(72) Inventor: Crosato, Remo, 31048 San Biagio di Callalta (TV) (IT)

(57) **Abstract**

Process for fermentation treatment of a vegetable product in the form of crushed material comprising the steps of:
(i) Storing the crushed material in a first tank to let a cap of solid particles floating on a liquid mass to form therein;
(ii) Connecting a second tank to the first for pumping over all or part of the liquid mass into it due to gravity ;
(iii) Isolating the two tanks;
(iv)Waiting for the liquid mass of the crushed material to generate gaseous products in an auxiliary tank due to fermentation;
(v) Connecting the second auxiliary tank in such a manner that, due to the deferential pressure between the two tanks, the gaseous products push the liquid mass from the second into the first tank, thus obtaining spontaneous pumping over of the liquid mass in the first tank.

## Description

The invention regards an apparatus and a method for the fermentation treatment of any vegetable product in the form of crushed material.

Though the invention is basically useful for any crushed vegetable product, the subsequent description shall refer in an exemplifying manner to winemaking, as the industry in which the invention proved particularly efficient.

"Délestage" (racking with air) is a known technique which, during winemaking, allows optimisation of exchange between the liquid and the solid phases.

Upon fermentation, a cap of marc forms over the must, which soaks it only with the lowermost layer.. There is no contact with the rest of the must, thus even leading to gathering of yeasts at the bottom of the tank of the must without participating in the wine transformation processes, with the entailed risks of producing unpleasant sulphurous compounds.

Thus, a shortly after the formation of the cap the tank is emptied for a first time, aerating the must thoroughly, emptying it into a second tank through pumps.

The cap is left to drip for a period of time at the bottom of the first tank, then the must is pumped again from the second tank spraying the cap with a low pressure jet, but at a high flow rate.

The cap shall raise through the liquid must and thus spraying and oxygenation of the cap shall occur. The number of "délestage" varies depending on the on the characteristics of the must.

Known winemaking apparatuses are made of a shell divided internally into two superimposed tanks. The must drops into the lower tank through gravity and then it is pumped again using pumps (pumping over) into the upper one. Obviously, use of mechanical pumps influences the complexity and cost of the winemaking apparatus.

Thus, this raises the problem regarding simplification of a winemaking apparatus of this type maintaining both its oenological features and organoleptic properties of the must intact.

The object of the present invention is to provide a new method and a related apparatus for the fermentation treatment of a vegetable product in form of crushed material, preferable must, capable of overcoming this drawback.

Such object is attained by means of a treatment method for a vegetable product in form of crushed material, comprising the following steps
(i) Storing the crushed material in a first tank to let a cap of solid particles floating on a liquid mass to form therein;;
(ii) Connecting a second tank to the first for pumping over all or part of the liquid mass into it by gravity;
(iii) Isolating both tanks;
(iv) Waiting for the liquid mass of the crushed material to generate gaseous products due to fermentation in an auxiliary tank;Connecting the second auxiliary tank in such a manner that, due to the deferential pressure between the two tanks, the gaseous products push the liquid mass from the second into the first tank, thus obtaining spontaneous pumping over of the liquid mass in the first tank.

The auxiliary tank can be a third tank or, advantageously, it might be the second tank itself.

Provided as variants to the method, to be adopted independently or in combination, there are the following:
- Steps (ii) to (iv) are performed cyclically depending on a preset program (for the automation of the process);
- The gaseous pressure in the auxiliary tank is controlled and step (v) is performed when such pressure exceeds a preset threshold;
- During the racking in step (v) the liquid mass is supplied into the first tank at at least two different points (to spray the cap better);
- Said different points are arranged at such a position to spray the cap, at least for a given period of time during the racking operation, from opposite sides, preferably from above and beneath (optimal spraying of the cap);

The invention extends to an apparatus for the fermentation treatment of a vegetable product in form of crushed material suitable for implementing the method provided for by the invention, preferably a winemaking apparatus useful for the delestage technique, comprising
- A first tank for holding the crushed material and letting a cap of solid particles floating on a liquid mass to form therein; A second collecting tank for collecting the liquid mass of the crushedmaterial,
- A first piping system adapted to put into communication the first tank with the second tank for racking the liquid mass from the first to the second tank,
- A second piping system adapted to put into communication the second and the firsttank, the system having at least one outlet inside the first tank,
- First and second valve means associated to the first and second piping system respectively to make the two tanks selectively communicating conditionally on the open/closed status of said means,
- A programmable processing device programmed to control the valve means in such a manner to perform, after the loading of the crushed material into the first tank, the steps of
- Connecting, by opening the first valve means, the first tank to the second tank for racking all or part of the liquid mass into the latter through gravity;
- Isolating the two tanks by closing the valve means;
- waiting by temporization for the liquid mass to generate gaseous products in the second tank through fermentation;
- Connecting, by opening the second valve means, the second tank to the first so that, thanks to the differential pressure between the two tanks, the gaseous products push the liquid mass from the second to the first tank, thus obtaining spontaneous pumping over of the liquid mass into the first tank.

As preferred variants of the apparatus, to be adopted alone or in combination, there are those in which;
- The processing device is interfaced with a pressure sensor, which measures the pressure of the gas present in the second tank, and/or a level sensor, which measures the level of the liquid in the second tank;
- The processing device is programmed to control the gaseous pressure in the second tank through a related sensor and drive the opening of the second valve means when such pressure exceeds a preset threshold;
- The processing device is programmed to control the level of the crushed substance in the second tank through a related sensor and close the first valve means during racking the liquid mass in case the level in the second tank reaches a preset threshold;
- The apparatus comprises third valve means for degassing the first tank towards the outside;
- The apparatus comprises an external shell partitioned internally by at least one separation wall into two sub-volumes which form said first and second tank, said first and second tank being arranged vertically one over the other inside the shell;
- The apparatus comprises spraying means arranged inside the first tank adapted to spray the cap during pumping over from at least two different angles, preferably from above and beneath (to spray the cap better); and preferably said spraying means comprise a set of pipes at the end of which spraying nozzles are mounted, said pipes having branches so as to arrange said nozzles at different heights inside the first tank. Said set may comprise a double sprayer made up of a main pipe communicating with the second tank which feeds an upper sprayer and a lower sprayer, the latter being connected through a vertical supply pipe to the main pipe upstream the upper sprayer.
- The processing device is programmed to deliver the liquid mass flow to certain sprayers of the set excluding others by controlling valves mounted on them.

In addition, the invention extends to an assembly of at least two apparatuses as described beforehand, wherein each apparatus additionally comprises a third piping system and associated third valve means adapted to connect its own first tank to the second tank of the other apparatus, said third system being adapted to convey, when required, the gaseous products of the fermentation of the crushed material, generated in said first tank, into said second tank thereby obtaining the evacuation of the liquid mass present therein.

Preferably and advantageously an assembly as defined comprises a common processing device adapted to manage the functions of each single apparatus and coordinate the interactivefunctions thereof.

In addition, the invention extends to a program for a programmable device like the ones described (for one or more apparatuses) such that when loaded and run by the programmable device it is adapted to manage the control of the valve means and/or the reading of the sensors as described above.

The method of the invention shall now be described with reference to a preferred embodiment of the winemaking apparatus, with reference to the drawings attached, wherein
Fig. 1 shows a transparent side view of a winemaking apparatus in a first operating configuration;
Fig. 2 shows a transparent side view of the winemaking apparatus of fig. 1 in a second operating configuration;
Figures 3-8 show the delestage steps for a variant of the method of the invention involving two or more winemaking apparatuses;

A winemaking apparatus 10 comprises an external shell 12 partitioned internally by means of walls 28, 32 into two tanks or superimposed volumes 14, 16, respectively upper and lower. The tank 14 is used to contain must 22, the tank 16 is used for temporary racking the must during delestage.

The tank 14 is provided with an upper hatch 40 and a lower drain 30, both made according to the known art. The tanks 14 and 16 have walls structured for bearing remarkable internal pressure: preferably they are designed to bear pressures between 0.5 and 6 bars.

The two tanks 14, 16 can be made communicating or not through a pipe 24 and an associated valve 26. A pressure regulating valve/vent 96 in the tank 16, positioned on a drain cover 31, ensures air outflow when racking the must 22 and subsequent regulation of the pressure inside the tank 16.

The bottom of the tank 16 communicates with a pipe 50, external to the tanks 14, 16, which ends at the top of and inside the tank 14 with a double sprayer. The pipe 50 is closable by a valve 66, in such a manner to isolate the tanks 14, 16.

The double sprayer is a preferential characteristic of the invention. It comprises an upper sprayer 60 and a lower sprayer 62. The latter is connected to a vertical supply pipe 64 which branches out from the pipe 50, upstream the coupling with the sprayer 60. Though only two spraying sources are shown, they can be increased, for example, providing more pipes or branches 64 and connecting their outlets to sprayer nozzles, or through one single sprayer (either upper or lower), automated by PLC control.

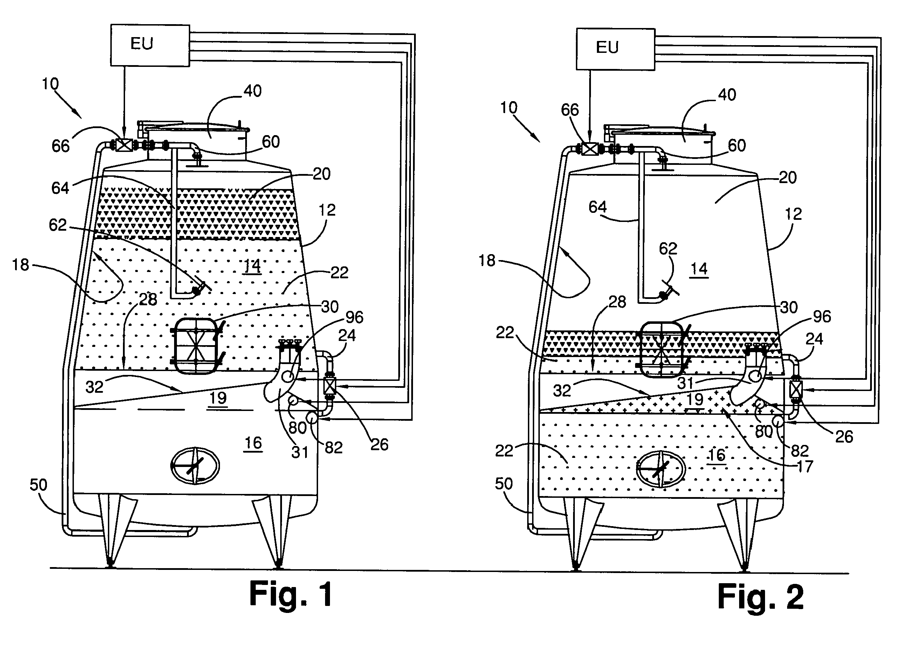

The winemaking apparatus 10 and the winemaking process operate as follows:
i) When the valves 26, 66 are closed some must 22 is loaded into the tank 14 according to the known art. After a given period of rest, by fermentation the must 22 generates a solid floating cap 20 (fig. 1).
ii) The liquid mass of the must 22 is, fully or partially, racked by gravity into the tank 16 through the pipe 24 by opening the valve 26 (fig. 2). A simple double-effect mechanical valve (not shown in the drawing) shall prevent the tank 14 from imploding and allow entry of air and thus oxygenation of the must. In this step the level of the cap 20 in the tank 14 drops, and through known means it is opened and defibrated.
iii) The valve 26 is closed and the must 22 is left to ferment in the tank 16. The valve 106 regulates the internal pressure of the gas in the tank 16 at the desired value. The tank 16 has a higher capacity with respect to the volume of the racked liquid, thus some gaseous products 17 of fermentation accumulate in a void volume 19 purposely left unfilled.

It must be observed that the roof of the tank 16 (the wall 32) is conical (in this case the apex is arranged in a decentralised manner) in order to:
a) maintain the operation pressure accurately (also a rounded roof could be used for this function);
b) Allow the advantageous lateral application into the lower racking compartment and in the apex of the roof of a drain with a wine top-up cover, and thus offering the possibility to use such compartment, at the end of the winemaking process, as a storage tank.

Regarding the volume 19 occupied by the gases 17 a volume between 20 and 30% of the total volume of the tank 16 is deemed enough.

As the fermentation proceeds, more and more gas (mostly CO₂) accumulates in the volume 19, and its pressure increases. The pressure in the volume 19 is left to reach values ranging preferably between 0.3 and 6 bars (the pressure value is established from time to time depending on the type of must and depending on the required flowrate/power of pumping over operations);
iv) The must 22 is pumped over into the tank 14 through the pipe 50 through the action of gas 17, which is subjected to a differential pressure (in the tank 14 the pressure is left equivalent or lower than the atmospheric pressure, through vents or controlled valves, not shown). The valve 66 is opened (valve 96 is closed) and the must 22 is spontaneously pushed by the gas 19 along the pipe 50 and to the sprayers 60, 62. Once the must 22 reaches the sprayer 60 it falls on the cap 20, which is particularly receptive at this point given that it has been crushed, and fills the tank 14 again. At the same time, also the sprayer 62 releases must and CO₂.
v) It is to be noted the advantageous effect of the double sprayer: the cap 20 is (from a given point onwards) sprayed from above and beneath; in particular, the must and the CO₂ released by the sprayer 62 are freed in the tank 14 breaking and wetting the cap 20 in a delicate manner from beneath. The delicate breakage of the cap 20 is paramount to extract aromas and pigments from the marc. The combined effect of the two sprayers 60, 62 ensures complete leaching of the cap 20.

However, depending on the type of winemaking process, the number and arrangement of the sprayers 60, 62 may vary, in order to obtain various effects during the winemaking process. Additionally, motorised sprayers or sprayers interfaced with a PLC may be used.
vi) Once the must 22 has been completely pumped over into the tank 14 another delestage cycle may be started. The pumping over effect under natural CO₂ can also be combined with the introduction under pressure of an inert gas into the tank 16.

The control of the process steps may occur by means of a programmable processing device EU, for example, a PC or a PLC. The programmable processing device can implement timers, programming user interfaces and driving stages for the valves 26, 66 and 99 (see arrows in fig. 1, 2).

The device EU can be interfaced with a pressure sensor 80, which measures the pressure of the gas 17 in the tank 16, and/or a level sensor 82, which measures the level of the liquid in the tank 16.

By reading and processing the data sent by the sensor 80, the device EU can command the opening of the valve 26 to perform step (iv) of the process, for example, upon reaching the maximum gaseous pressure threshold-level in the tank 16, pressure maintained for example by the control exercised by the valve 96. Even the valve 96 can be controlled by the programmable device EU.

The device EU can also control the pressure in the tank 14.

By reading and processing data sent by the sensor 82, the device EU can command the closure of the valve 26 in step (ii) of the process in such a manner not to exceed a threshold-level in the tank 16.

Thus, it is clear that every step of the winemaking process through delestage can be advantageously automated and/or programmed. This allows, for example, to set periodical delestage cycles, and to experiment various methods of leaching the cap 20. For example, different sprayers can be used from time to time, programming the amount of liquid must for pumping over towards some sprayers of a set and excluding others (by controlling valves mounted on them, not shown), or operating with different pumping over pressures, etc.

It goes without saying that some construction details of the winemaking apparatus can also be omitted, or used in combination with others in other embodiments.

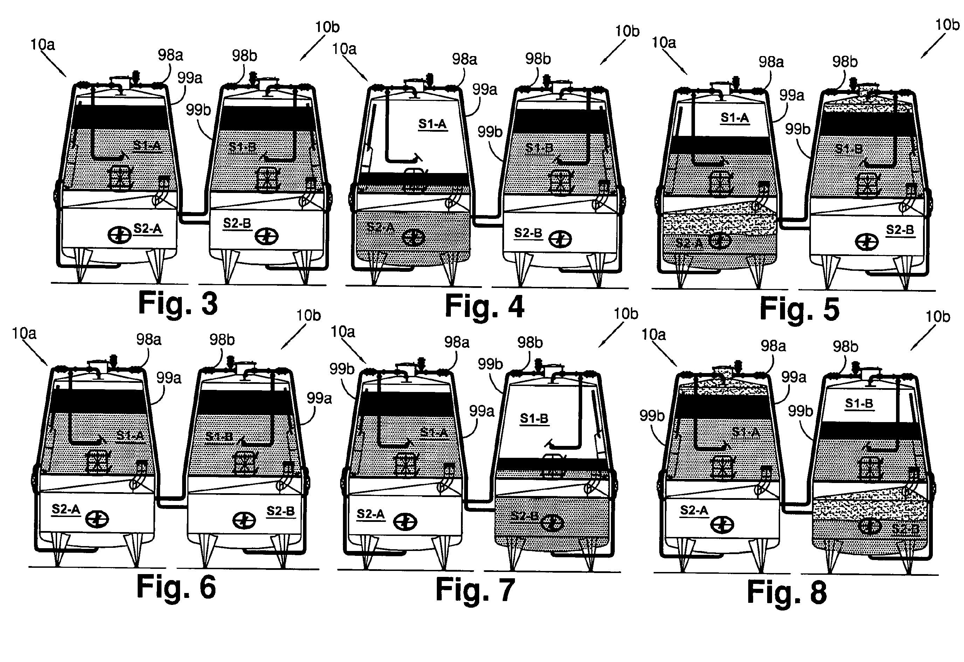

As to Figures 3-8 now, the steps of delestage according for a variant method of the invention, which involves two or more winemaking apparatus like the one described, are now described.

Basically, a gas accumulating tank is used in a winemaking apparatus and the gas accumulating tank discharges its gaseous contents into the tank of another winemaking apparatus which operates in cooperation.

Figures 3-8 show only the references required for this explanation, regarding new components (the others are deemed to be the ones already described).

Two equal (between them and to the previous one) winemaking apparatuses 10a, 10b respectively comprise a third piping system 99a, 99b and associated valve means 98a, 98b.

The pipes 99a (99b) are arranged to put into communication the first tank S1-A (S1-B) of the winemaking apparatus 10a (10b) with the second tank S2-B (S2-A) of the winemaking apparatus 10b (10a), in such a manner to collect the fermentation gases from the first and accumulate them in the second.

The winemaking apparatus 10a, 10b operate according to the following process steps:
(i) Both the first tanks S1-A, S1, B of the two winemaking apparatuses 10a, 10b, are filled with must, which has formed a floating cap (fig. 3);
(ii) delestage step in the winemaking apparatus 10a: the must is racked from tank S1-A into tank S2-A (fig. 4);
(iii) In the meanwhile, the must in tank S1-B has generated gases due to fermentation. These gases are used for pumping over the must in the winemaking apparatus 10a: the valve means 98b open and the gases flow through the pipes 99b from the top of the tank S1-B into the tank S2-A, pushing the must held therein into the tank S1-A again.
(iv) Once pumping over has been completed, the situation is like that in step (i), (v) destelage step in the winemaking apparatus 10b: the must is racked from the tank S1-B into the tank S2-B (fig. 7);
(vi) In the meanwhile, the must in the tank S1-A has generated some gases due to fermentation. These gases are used for pumping over the must in the winemaking apparatus 10b: the valve means 98a open and the gases flow through the pipes 99a from the top of the tank S1-A into the tank S2-B, pushing the must held therein into the tank S2-A again.
(vii)then, back to step (i), and the cycle may start again..

The programmable device EU can also control the valve means 98a, 98b thus managing the operation of each single winemaking apparatus 10a, 10b, but also coordinating and synchronising the reciprocal functioning and the reciprocal interaction steps of the two (or more) winemaking apparatuses 10a, 10b.

## Claims

1. Process for fermentation treatment of a vegetable product in the form of crushed material comprising the steps of:
(i) Storing the crushed material in a first tank to let a cap of solid particles floating on a liquid mass to form therein;
(ii) Connecting a second tank to the first for pumping over all or part of the liquid mass into it by gravity;
(iii) Isolating the two tanks;
(iv) Waiting for the liquid mass of the crushed material to generate gaseous products due to fermentation in an auxiliary tank;
(v) Connecting the second auxiliary tank in such a manner that, due to the deferential pressure between the two tanks, the gaseous products push the liquid mass from the second into the first tank, thus obtaining spontaneous pumping over of the liquid mass in the first tank.

2. Process according to claim 1, wherein the auxiliary tank consists in the second tank itself.

3. Process according to claim 1 or 2, wherein the steps from (ii) to (v) are performed cyclically according to a preset program.

4. Process according to one of the preceding claims, wherein the gaseous pressure in the auxiliary tank is controlled and step (iv) is performed when such pressure exceeds a preset threshold.

5. Process according to any of the preceding claims, wherein during the racking operation in step (v) the liquid mass is supplied into the first tanks at at least two different points.

6. Process according to claim 5, wherein said different points are arranged at positions in such a manner to spray the cap, at least for a given period of time during the racking operation, from opposite parts, preferably form above and beneath.

7. Apparatus for fermentation treatment of a vegetable product in the form of crushed material suitable for implementing the process of the preceding claims, comprising
- A first tank for holding the crushed material and letting a cap of solid particles floating on a liquid mass to form therein;
- A first piping system adapted to put into communication the first tank with the second tank for racking the liquid mass from the first to the second tank;
- A second piping system adapted to put into communication the second and the firsttank, the system having at least one outlet inside the first tank;
- First and second valve means associated to the first and second piping system respectively to make the two tanks selectively communicating conditionally on the open/closed status of said means,
- A programmable processing device programmed to control the valve means in such a manner to perform, after the loading of the crushed material into the first tank, the steps of
- Connecting, by opening the first valve means, the first tank to the second tank for racking all or part of the liquid mass into the latter through gravity;
- Isolating the two tanks by closing the valve means;
- waiting by temporization for the liquid mass to generate gaseous products in the second tank through fermentation;
- Connecting, by opening the second valve means, the second tank to the first so that, thanks to the differential pressure between the two tanks, the gaseous products push the liquid mass from the second to the first tank, thus obtaining spontaneous pumping over of the liquid mass into the first tank.

8. Apparatus according to claim 7, wherein the processing device is interfaced with a pressure sensor (84), which measures the pressure of the gas present in the second tank (62), and/or a level sensor (82), which measures the level of the liquid in the second tank (62).

9. Apparatus according to claim 7 or 8, where the processing device (EU) is programmed to control the gaseous pressure in the second tank by means of the related sensor and to command the opening of the second valve means when such pressure exceeds a preset threshold.

10. Apparatus according to one of claims 7 to 9, wherein the processing device (EU) is programmed to control the level of the crushed material in the second tank by means of the related sensor and to close the valve means when racking the liquid mass should the level in the second tank reach a preset threshold.

11. Apparatus according to one of claims 7 to 10, comprising third valve means adapted for degassing the first tank towards the external.

12. Apparatus according to one of claims 7 to 11, comprising an external shell partitioned internally by at least one separation wall into to sub-volumes which constitute said first and second tank, being that said first and second tanks arranged vertically one over the other inside the shell.

13. Apparatus according to one of claims 7 to 12, comprising spray means arranged inside the first tank adapted to spray the cap during pumping over at least from two different angles, preferably form above and from beneath.

14. Apparatus according to claim 13, wherein said spray means comprise a set of pipes at the end of which two spray nozzles are mounted, said pipes being provided with branching such to arrange said nozzles at different heights inside the first tank.

15. Apparatus according to claim 14, wherein said set comprises a double sprayer made up of a main pipe, communicating with the second tank, which feeds an upper sprayer (60) and a lower sprayer (64), the latter being connected by means of a vertical supply pipe (64) to the main pipe upstream the upper sprayer (60).

16. Apparatus according to claim 14 or 15, where the processing device (EU) is programmed to deliver the flow of the liquid mass to given sprayers of the set excluding others by controlling valve means mounted on them.

17. Assembly of at least two apparatus similar to the one of claims 7 to 16, where each apparatus additionally comprises a third piping system and associated third valve means arranged to put into communication its own first tank to the second tank of the other apparatus, said third piping system being adapted to convey, when required, the gaseous products of the fermentation of the crushed material, generated in said first tank, into the second tank, thereby obtaining the evacuation of the liquid mass held therein.

18. Assembly of at least two apparatuses as in claim 17, comprising a common processing device adapted to manage the functions of each single apparatus and to coordinate the interactive functions thereof.

19. Program for a programmable device as in claims 7 to 18, such that when loaded and run by the programmable device, the program is adapted to manage the control of the valve means and/or reading the sensors as described in claims 7 to 11.
